# EUROPEAN PATENT SPECIFICATION

(11) **EP 3 648 577 B1**
(45) Date of publication and mention of the grant of the patent: **10.04.2024**
(21) Application number: 18710564.8
(22) Date of filing: 01.03.2018
(51) Int. Cl.: A01K 1/00, A01K 29/00

(54) **METHOD AND SYSTEM FOR MONITORING THE DEVELOPMENT OF ANIMALS**
VERFAHREN UND SYSTEM ZUR ÜBERWACHUNG DER ENTWICKLUNG VON TIEREN
PROCÉDÉ ET SYSTÈME DE SURVEILLANCE DU DÉVELOPPEMENT D'ANIMAUX

(30) Priority: 05.07.2017 NL 2019176
(43) Date of publication of application: 13.05.2020
(73) Proprietor: Nedap N.V., 7141 DC Groenlo (NL)
(72) Inventor: SCHUTTE, Jort Johannes Wilhelmus, 7141 DC Groenlo (NL); MULLER, Roxie Sabri Romero, 7141 DC Groenlo (NL)
(74) Representative: V.O.
(86) International application number: PCT/NL2018/050129
(87) International publication number: WO 2019/009700

(56) References cited:
- EP-A1- 2 957 861
- WO-A1-2015/088329
- WO-A2-2011/039112
- US-A1- 2005 257 748

## Description

The invention relates to a method and system for monitoring the development of animals in time, such as monitoring the growth of animals. In particular, this is about farm animals such as calves and piglets. In particular, the invention relates to the monitoring of a multiplicity of animals in a collective space such as a pen or barn space.

Growth of an animal such as a calf is crucial in calf rearing. Especially in the first three months of life, nothing is left undone to initiate the proper growth curve. Accordingly, the growth of a calf is closely watched by stock farmers. There are various known methods by which a farmer monitors the growth of a calf. Typically, known methods comprise physically separating a calf from other calves and weighing the calf using scales. On the scales, usually, only the front part of the body is weighed. The farmer then compares the weight of the previous measurement with the new measurement and derives from this a particular growth of the calf. The farmer then concludes on the basis of the determined growth whether the calf is growing as desired, or that there is stagnation or other deviation in growth. Such methods are particularly time intensive and have to be performed individually by the farmer. Data points in respect of growth that are collected by the farmer are sometimes not sufficiently frequent when the farmer keeps large numbers of calves. Further, the data points collected may contain measuring inaccuracies which are in or around the same order of magnitude as the measured growth. Especially the first eight weeks after birth of the calf, and in particular the first two weeks, are decisive for the growth of a calf. It may happen that stagnation of growth of a calf is recognized later than the (part of a) day when the stagnation of growth occurs. This may then have adverse consequences for the future growth and the welfare of the calf. A similar thing applies to other farm animals such as piglets.

Further, also when an animal is adult, it is important to follow the development of an animal in time. In this manner, for example, defects and diseases can be found in the animals.

An automated monitoring method is disclosed in WO 2015/088329. The method comprises the steps: recording, by a three-dimensional camera system, at least one three-dimensional image of the animal, and processing, by a processing device, the at least one image of the animal, wherein processing of the image comprises the steps of: forming a three-dimensional surface representation of a surface part of the animal from the at least one image, determining a size parameter representative for the size of the animal on the basis of the surface representation, and determining a volume parameter representative for the volume of the animal, and monitoring the volume parameter and size parameter or a combination thereof to monitor growth of the animal.

WO2011039112 discloses an arrangement for monitoring the behavior of livestock animals located within a predefined area. To this aim each animal has a respective identification means uniquely identifying the animal. Image registering means repeatedly record image data representing the animals. A data processing means receives the image data, and based thereon derives a movement pattern for each animal. Moreover, at least one identification station registers an animal identity in response to the passing of one of said identification means within an operating zone of the identification station. The identification station is distinct from the at least one image registering means.

EP 2957861 pertains to a device and method for automated parameters calculation of an object. The device comprises a camera configured to acquire, in a scene, a two dimensional image, a sequence of images and/or a video sequence of an object, such as a livestock animal. First means calculate the pixel size of the object in the acquired scene for calibration purposes; and second means calculate several parameters of the object from the acquired two dimensional image, said sequence of images and/or said video sequence by using specific segmentation algorithms and a priori models of the object. The
parameters include at least the size, dimensions, body part dimensions, body features, weight and/or volume of the object.

It is an object of the invention to provide a method and a system whereby a farmer is enabled to determine the development in time such as growth, accurately and efficiently, that is, relatively little labor-intensively. This makes it possible to intervene in a timely manner, for example in the nutrition of an animal such as a calf or piglet, in a critical period of the development of the animal. It is further an object of the invention to offer a farmer accurate insight into the development in time of the animal, such as the growth of the animal. It is further also an object to provide an ameliorated method and system for monitoring the development in time of an animal (such as a calf or piglet) in the presence of a group of such animals.

To this end, the invention provides a method according to claim 1 and systems according to claims 13 and 15. By virtue of the steps a.-f., animals do not need to be individually measured or weighed. The method further comprises step g. in which the steps d.-f. are repeated when the animal appears in the image again. As a result, a large number of measurements can be done within a relatively short period of time. The method further comprises also the step h. to gain insight into the development of the animal in time, such as the growth of the animal.

Optionally, the collected information is, preferably with the first computer, compared with a predetermined development curve of the animal such as a growth curve. The development curve relates, for example, to a development of a condition parameter of an animal in time, such as a weight parameter, volume parameter or length parameter of the animal or of a weight parameter, volume parameter or length parameter of a part of the body of the animal. The development curve can cover, for example, the entire life of the animal or the period of the animal where it is adult or a period of the animal where it is still growing until the animal is full-grown. The growth curve relates, for example, to a development of a growth parameter of an animal in time. The growth parameter is for example a weight parameter, volume parameter and/or length parameter of the animal or of a part of the body of the animal, such as the torso. A length parameter, for example, again relates to a length, height or width of the animal or of a part of the body of the animal.

The growth curve can cover, for example, the first weeks and/or months after birth of an animal. Optionally, the predetermined growth curve is a minimum expected growth curve of a healthy animal. Preferably, with the first computer, an attention signal is generated when the collected information deviates from the development curve such as the growth curve, for example when such deviation meets a predetermined criterion.

Optionally, a predetermined criterion is that the deviation is greater than an acceptable difference (such as 5%, 10%, 15%, 20% or 25%) between collected information and the development curve such as the growth curve at a corresponding point in time. The deviation can reflect an extent of lag in development of the animal. An advantage is that deviating developments can be noticed. In particular, it holds that the first computer is so configured that an attention signal is generated when the animal information collected in time (which represents the development of the animal in time) deviates relative to the development curve, more particularly, that the first computer is so configured that an attention signal is generated when a growth of the animal lags behind the growth curve.

The attention signal is generated, for example, when an estimated growth parameter at a point in time is lower than a same growth parameter according to the predetermined growth curve at a corresponding point in time. Also, or instead, the attention signal may be generated, for example, when the change of an estimated growth parameter at a particular point in time is lower than the change of a same growth parameter according to the predetermined growth curve at a corresponding point in time. A change of an estimated growth parameter can be determined, for example, by comparing an estimated growth parameter with a previously estimated growth parameter.

Optionally, the attention signal comprises the identity determined in step e.

Optionally, step e. is carried out with a reader for wirelessly reading out the tags, the animals being each provided with a tag which comprises information about an identity of an animal. The reader and the tag are preferably of the RFID and/or UHF type. An RFID tag is a passive tag, known per se, which obtains its energy from the interrogation field which is emitted by the (RFID) reader. A UHF tag is provided with a transmitter which transmits on the UHF band to transfer information to the reader and to that end is provided with its own energy source such as a battery.

Optionally, the reader is so disposed that in step e. the identity of an animal is determined which is at such a position in the image that this animal in step d. is recognized in the image.

Optionally, in step b. the area comprises just a part of the at least one space where the animals can be.

Optionally, the area has such dimensions that a multiplicity of animals may be in it at the same time. Preferably, the area has a surface area which is in the range of 10-400 m2, in particular 15-100 m2.

Optionally, it holds that the area has such dimensions that A animals may be in it at the same time, with A being in the range of 1-10,000, in particular 1-1,000, more particularly 1-100, and still more particularly 1-50.

Optionally, with the at least one 3D camera and/or the multiplicity of cameras respectively areas of a multiplicity of spaces such as pens are covered.

Optionally, the signal processing unit is part of the first computer, while optionally the signal processing unit and/or the first computer are in a cloud.

Optionally, each animal is furthermore provided with at least one sensor for determining the behavior of the animal of which in step e. the identity has been determined, the behavior comprising, for example, a condition, such as walking, lying, eating and ruminating. The behavior may further comprise information about when particular conditions occur spread in time. The information obtained with the at least one sensor about the behavior of the animal may be used by a farmer in an analysis of the animal in combination with the information collected in step h with reference to the predetermined growth curve.

Optionally, the information about the behavior of the animal obtained with the sensors is used to adjust the predetermined criterion, for example such that underweight of the animal is detected at a smaller deviation when it already appears earlier from the determined behavior that the animal eats relatively little, or less often, and vice versa.

Optionally, the system according to the invention further includes at least one identification unit such as a reader for carrying out step e. The reader is preferably an RFID reader and/or UHF reader. Preferably, the system also includes a tag of a type that can be read out by the reader concerned so that the identity of an animal can be determined with the reader. Optionally, the first computer of the system is configured to compare the collected information with a predetermined development curve such as a growth curve. The first computer is further configured to generate an attention signal when the collected information deviates from the development curve such as the growth curve, with the deviation meeting a predetermined criterion.

Optionally, the first computer is so configured that an attention signal is generated when a growth of the animal lags behind the growth curve.

Optionally, the attention signal comprises the identity determined with the identification unit. The attention signal can take diverse forms such as an electronic signal, a wireless transmitter signal, an audio signal and a visible signal.

Optionally, the identification unit comprises a reader. The system may furthermore include a multiplicity of tags, the animals being each provided with a tag which comprises information about an identity of an animal. The reader and the multiplicity of tags are preferably of the RFID and/or UHF type.

Optionally, the identification unit is so disposed that, in use, the identity of an animal is determined when it is at such a position in the image that this animal is recognized in the image with the signal processing means, in use.

Optionally, the 3D camera and/or the multiplicity of cameras are so configured and/or disposed that, in use, the area comprises only a part of the at least one space where the animals can be in the pen.

Optionally, the area of the system has such dimensions that a multiplicity of animals may be present in it at the same time while, preferably, the area has a surface area which is in the range of 10-400 m2, in particular 15-100 m2.

Optionally, it holds that the area has such dimensions that A animals may be in it at the same time, with A being in the range of 1-10,000, in particular 1-1,000, more particularly 1-100, still more particularly 1-50.

Optionally, the at least one 3D camera and/or the multiplicity of cameras are so disposed that respectively a multiplicity of spaces such as a multiplicity of pens is covered.

Optionally, the signal processing unit is part of the first computer. Optionally, the signal processing unit and/or the first computer are in a cloud.

Optionally, the system furthermore includes sensors, while, in use, each animal is furthermore provided with at least one of the sensors for determining the behavior of the animal, the behavior concerning, for example, a condition which the animal is in, such as walking, lying, eating and/or ruminating, and/or information about when particular conditions occur spread in time. The at least one sensor is, for example, a motion sensor. The first computer is further configured for, in use, utilizing the information about the behavior of the animal obtained with the sensors in comparing the collected information with the predetermined development curve such as the growth curve.

Optionally, the first computer is configured for, in use, utilizing the information about the behavior of the animal obtained with the at least one sensor to adjust the predetermined criterion, for example such that, in use, underweight of the animal is detected at a smaller deviation when it already appears earlier from the determined behavior that the animal eats relatively little, or less often, and vice versa.

The invention will be further clarified with reference to the drawing. The detailed description provides examples of possible modes of use of the invention. These modes of use should not be considered to be the only possible embodiments that fall under the ambit of the invention. The scope of the invention is defined in the claims, and the description should be regarded as being illustrative without thereby limiting the invention.
Figure 1 shows a schematic system for monitoring the development in time of animals, such as growth of animals;
Figure 2 shows a further schematic system for monitoring the development in time of animals such as growth of animals;
Figure 3 shows a further schematic system for monitoring the development in time of animals such as growth of animals; and
Figure 4 shows a schematic method for monitoring the development in time of animals such as growth of animals.

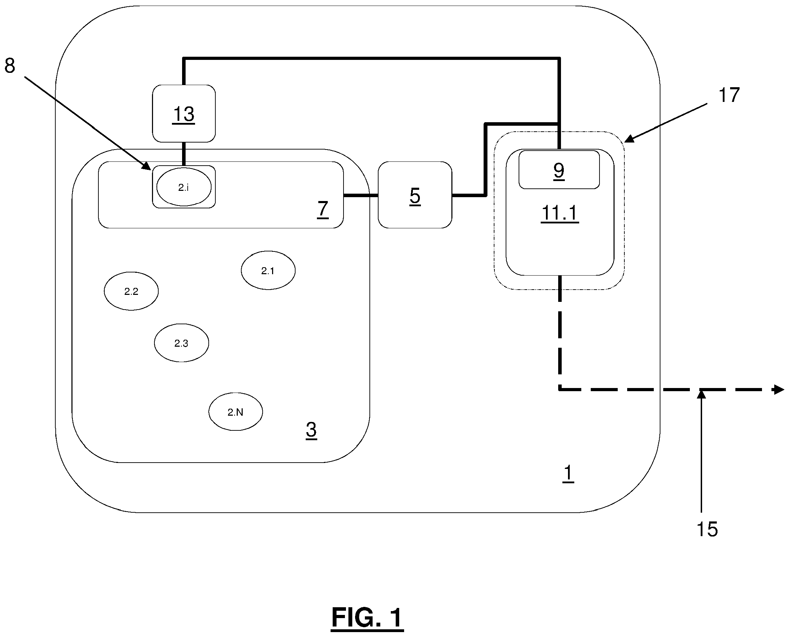

Figure 1 shows a schematic system 1 for monitoring the development in time of animals such as growth of animals, in this example calves 2.i. The system 1 comprises at least one space such as a pen 3 in which a multiplicity of calves 2.i (i=1, 2, 3, ,,,,N) can be gathered together. The system 1 further comprises a camera system 5 for forming a 3D image of an area 7 in the pen 3 where the calves 2.i can be. The camera system 5 in this example is a 3D camera, such as a stereo camera, but can also be a multiplicity of 2D cameras, each with its own housing, which can together constitute the 3D image. The camera system 5 can optionally also comprise a combination of the 3D camera and the multiplicity of 2D cameras. The system 1 additionally comprises also a signal processing unit 9 for processing information about the 3D image of the area 7. The signal processing unit 9 is configured to recognize, according to a first predetermined algorithm, a calf 2.i in the 3D image of the area 7, as at a position 8 in the 3D image of the area 7. The system 1 further comprises an identification unit 13 configured to determine an identity of the calf 2.i which has been recognized by the signal processing unit 9, as at the position 8 which may be predetermined. In this example, the identification unit 13 is implemented as a reader, such as an RFID reader or UHF reader. The system 1 additionally comprises a multiplicity of tags (not represented, but conventional), such as RFID tags or UHF tags. The calves 2.i are each provided with a tag of this multiplicity of tags. Each tag comprises information about the identity of a corresponding calf. The signal processing unit 9 is further configured for, on the basis of an obtained 3D image of the recognized calf 2.i, within the obtained 3D image of the area 7, according to a second predetermined algorithm, estimating at least one condition parameter, in this example a growth parameter of the recognized calf 2.i. The at least one growth parameter in this example is a weight of the calf 2.i, but this may additionally, or instead, also be a volume parameter or a length parameter. A length parameter represents, for example, a length or width or height of the calf 2.1. It will be clear that the second algorithm may also be designed to estimate length and/or volume parameters on the basis of the projection of the calf 2.i in the obtained 3D image of the area 7. This may then be instead of, or in combination with, determining the weight. The weight of the calf 2.i can then be derived from measured length and/or volume parameters of the calf, which are then combined with a predetermined density relation for obtaining a weight of the calf.

The system 1 furthermore comprises a first computer 11.1 configured to collect, at different points in time, information obtained about the at least one growth parameter of the identified recognized calf 2.i, so as to obtain insight into the growth of the recognized calf 2.i in time. In this example, the signal processing unit 9 is part of the first computer 11.1, but this is entirely optional. The first computer 11.1 is optionally also configured to compare the collected information with a predetermined growth curve. For example, the at least one growth parameter of the recognized calf 2.i at one point in time can be compared with at least one reference growth parameter at a corresponding point in time of the predetermined growth curve. The predetermined growth curve may then be representative, for example, of an expected development in growth, such as a minimum expected development, of the at least one growth parameter of a healthy calf in time. The first computer 11.1 may then be configured to generate an attention signal when the collected information deviates from the predetermined growth curve to the extent that the deviation meets a predetermined criterion. Optionally, a predetermined criterion is that the deviation mentioned is greater than an acceptable difference between collected information and the growth curve at a corresponding point in time, such as 5%, 10%, 15%, 20% or 25%, and the deviation is a negative deviation and hence reflects a lag in the development of the calf 2.i.

The attention signal is optionally a digital notification about a predetermined criterion being met, which can be observed via a human interface such as a computer, tablet or mobile phone (not represented, but conventional). The attention signal optionally comprises the identity of the recognized calf 2.i. In this example, the identification unit 13 is so disposed that the calf 2.i which is identified is also recognized in the 3D image and vice versa. The camera system 5 is further so configured that the area 7 comprises only a part of the total area (the space in the pen 3) where the calves can be. The area 7 in this example has such dimensions that A calves may be in it at the same time. 'A' is then in the range of 1-10,000, preferably 1-1,000, more preferably 1-100, and still more preferably 1-50. In this example N is less than or equal to A. The area 7 has a surface area which is in the range of 10-400 m², in particular in the range of 15-100 m². The signal processing unit 9 and the first computer 11.1 are in a cloud 17, such as virtually on a distant server. This, however, is entirely optional and indicated with a dotted line.

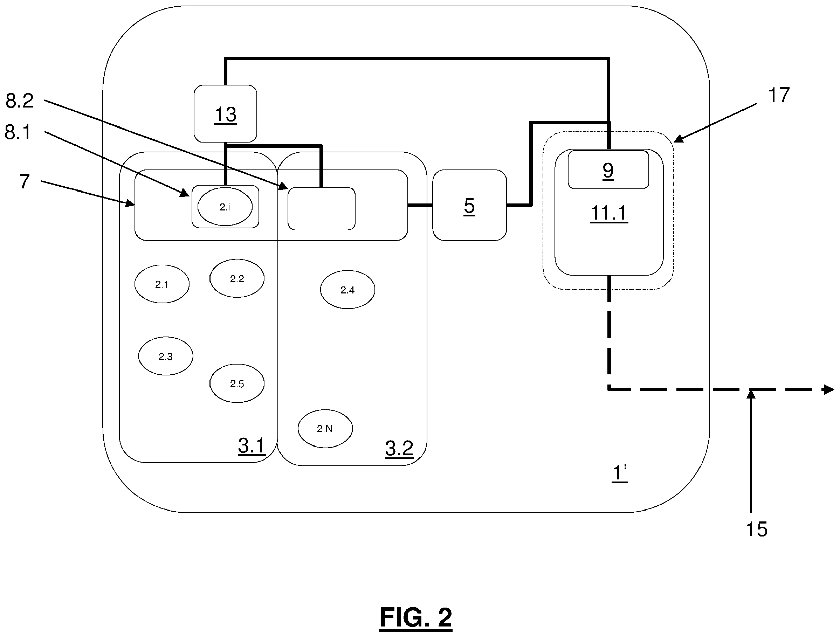

Figure 2 shows a further schematic system 1' for monitoring the growth of calves 2.i. In Figure 1 and Figure 2, mutually corresponding parts are provided with a same reference numeral. In the following, only the differences of the system 1' of Figure 2 with respect to the system 1 of Figure 1 will be discussed. In this example, the camera system 5 is so disposed that respectively areas (spaces) of a multiplicity of pens 3.1, 3.2 are covered by the area 7. The multiplicity of pens 3.1, 3.2 in this example amounts to two pens, but this may be more pens. The signal processing unit 9 is configured to be able to recognize calves, according to a first predetermined algorithm, in at least each of the pens 3.1, 3.2, as at a first position 8.1 in the first pen 3.1 and a second position 8.2 in the second pen 3.2. In this example the identification unit 13 is configured to determine an identity of the calf 2.i which has been recognized by the signal processing unit 9, when the animal is at the first position 8.1 or the second position 8.2.

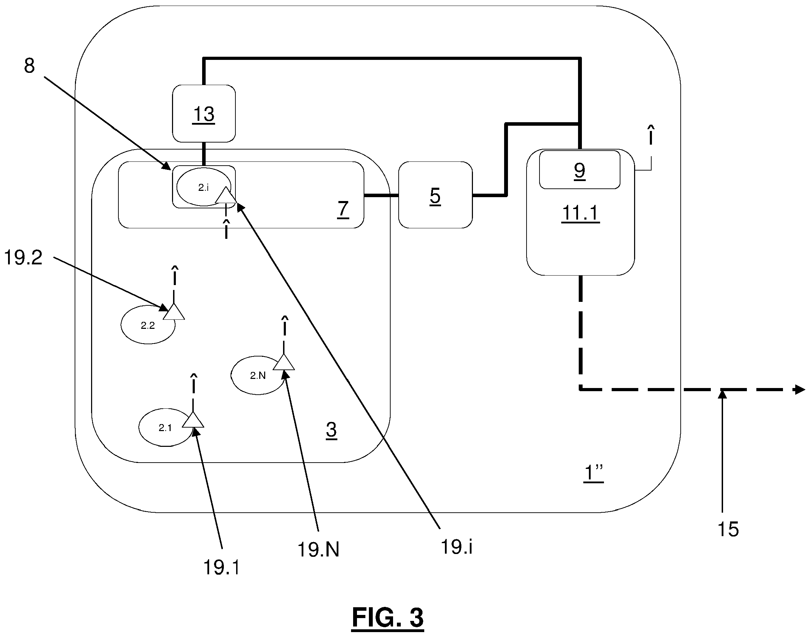

Figure 3 shows a further schematic system 1" for monitoring the growth of calves 2.i. In Figure 1 and Figure 3, mutually corresponding parts are provided with a same reference numeral. In the following, only the differences of the system 1" of Figure 3 with regard to the system 1 of Figure 1 will be discussed. In this example, the system 1" furthermore includes behavior sensors 19.i. A behavior sensor is, for example, a motion sensor to detect movements of the animal.

Each calf 2.i carries one of the behavior sensors 19.i for determining the behavior of the respective calf. The behavior comprises, for example, a condition which the calf 2.i is in, such as walking, lying, eating and/or ruminating, and/or information about when particular conditions occur, spread in time. The first computer 11.1 is further configured for, in use, utilizing the information about the behavior of the calf 2.i obtained with the behavior sensor 19.i in comparing the collected information with the predetermined growth curve. The behavior sensors 19.i and the first computer 11.1 are configured to be communicatively connected via, for example, a wireless network î. In this example, the first computer 11.1 is not in the cloud 17 (represented in Figure 1), but may be so. The first computer 11.1 is configured for, in use, utilizing the information about the behavior of the calf 2.i obtained with the behavior sensor 19.i to adjust the predetermined criterion, for example, such that, in use, underweight of the calf 2.i is detected at a smaller deviation when it already appears earlier from the determined behavior that the calf eats relatively little, or less often, and vice versa. This could be achieved by lowering the earliermentioned acceptable difference when it is already noticed from the behavior of the calf 2.i that the calf eats relatively little or less often.

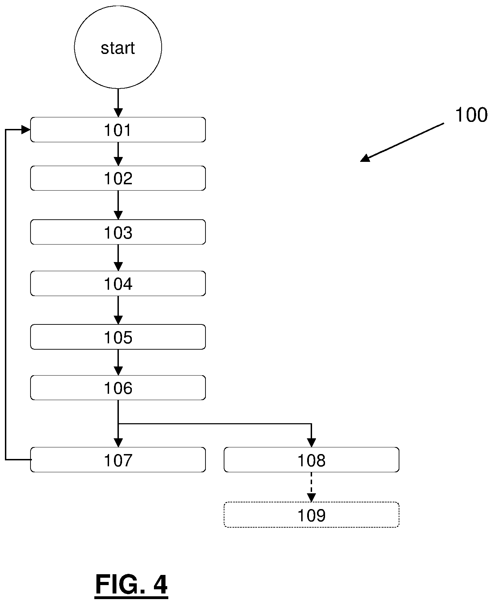

Figure 4 shows a schematic method 100 for monitoring the growth of calves. The systems 1, 1', 1" of Figures 1, 2, 3 are each configured for carrying out the method steps of Figure 4.

In a first step 101, the multiplicity of calves 2.i are gathered together in the at least one collective pen 3 (Figures 1, 3), 3.1 (Figure 2), 3.2 (Figure 2) in which the calves 2.i can move freely. The first step 101 leads to a second step 102.

In the second step 102, a 3D image of an area 7 is obtained within the at least one pen 3, 3.1, 3.2 with the aid of the camera system 5, while the calves can be within the area. The second step 102 leads to a third step 103.

In the third step 103, information about the 3D image of the area 7 is supplied to the signal processing unit 9. The third step 103 leads to a fourth step 104.

In the fourth step 104, with the signal processing unit 9, according to the first predetermined algorithm, the calf 2.i is recognized in the 3D image. The fourth step 104 leads to a fifth step 105.

In the fifth step 105, the identity of the calf 2.i in the 3D image is determined. The calf 2.i, which is recognized in the 3D image is the same calf that is identified, and vice versa. The fifth step 105 leads to a sixth step 106.

In the sixth step 106, with the signal processing unit 9, on the basis of a 3D image obtained and supplied in the third step 103, of the calf 2.i recognized in the fourth step 104, within the 3D image of the area 7, according to the second predetermined algorithm, the at least one growth parameter is estimated. The sixth step 106 leads to a seventh step 107 and an eighth step 108.

In the seventh step 107 it is determined that the recognized and identified calf 2.i has reappeared in the 3D image of the area 7 again. The seventh step 107 leads to the first step 101.

In the eighth step 108, with the aid of the first computer 11.1, the information obtained in the fourth step 104 through the seventh step 107 is collected to gain insight into the growth of the calf 2.i in time.

In this method 100, preferably with the first computer 11.1, the collected information can be compared with a predetermined growth curve. Preferably, the eighth step 108 leads to an optional ninth step 109.

In the optional step 109, with the first computer 11.1, an attention signal is generated when the collected information deviates from the growth curve when the deviation meets the predetermined criterion. It will be clear that the steps as described above do not necessarily need to take place in this same order. Also, other steps may take place.

In the case where each calf 2.i is provided with sensors 19.i for determining the behavior of each calf 2.i whose identity has been determined in the fifth step 105, information about the behavior of the calf 2.i obtained with the sensor 19.i can be used in comparing the information collected in the eighth step 108 with the predetermined growth curve. The information about the behavior of the calf 2.i can then be used to adjust the predetermined criterion. One predetermined criterion is, optionally, that the deviation in absolute terms is greater than an acceptable difference between collected information and the growth curve at a corresponding point in time, such as 5%, 10%, 15%, 20% or 25%, with the deviation being such that the information deviates negatively relative to the growth curve. Adjusting the predetermined criterion could be done, for example, by reducing the acceptable difference. For example, this may be done such that underweight of the calf 2.i is detected at a smaller deviation when it already appears earlier from the determined behavior that the calf 2.i eats relatively little or less often, and vice versa.

For the sake of the clarity and conciseness of the description, features are herein described as part of the same or of separate embodiments. It will be clear to those skilled in the art that embodiments comprising combinations of any or all of the features described also fall within the scope of protection of the invention. Within the purview of those skilled in the art, modifications are possible which are understood to be within the scope of the protection. For example, the calves, instead of being in a pen, can also be in a barn space where they can move freely. Other spaces than pens hence also fall within the framework of the invention. In the example given, the growth of an animal is monitored, which then involves determining a growth parameter and a growth curve. It is also possible, however, to monitor a development parameter of the animal and to compare it with an associated development curve. The development parameter can then, again, be a weight parameter, volume parameter or length parameter of the animal or of a part of the body of the animal as discussed before. The development curve can then again relate to the expected normal development of one or more development parameters in time. A growth curve is a development curve for animals still growing. A development curve, however, is a broader concept which can also relate to the entire lifespan of an animal or just to the period when animal is adult. In the latter case, the development curve which relates to a development parameter such as a weight parameter, volume parameter or length parameter of the animal will be practically constant in time. Only when the animal is relatively old may it be that, for example, a weight parameter or volume parameter decreases, for example because a body cell mass of the animal decreases. In the foregoing, a calf was taken as an example of an animal. However, other animals such as piglets and horses can be monitored with the same method and a same system as discussed hereinbefore. The scope of protection of the current invention is defined by the appended claims.

## Claims

1. A method (100) for monitoring the development of animals in time, such as monitoring the growth of animals, in particular of farm animals such as calves and piglets, the method comprising:
a. bringing together (101) a multiplicity of animals in at least one collective space, such as a pen or barn space, in which the animals can move freely;
b. obtaining (102) a 3D image of an area which is at least for a part within the at least one space, with the aid of at least one 3D camera and/or a multiplicity of cameras such as a multiplicity of 2D cameras (5) while the animals can be within the area;
c. supplying (103) information about the 3D image to a signal processing unit (9);
d. recognizing (104) an animal in the 3D image;
e. determining (105) the identity of the animal which has been or is recognized in step d.;
f. with the signal processing unit (9), on the basis of the information about the 3D image supplied in step c., and according to a second predetermined algorithm, at least estimating (106) a condition parameter of the animal such as a weight, a volume and/or a length parameter of the animal recognized in step d.;
g. repeating (107) steps d.-f. when the animal appears in the image again;
h. with the aid of a first computer (11), collecting (108) the information obtained in steps d.-g. to gain insight into the development in time of the animal such as the growth in time of the animal, **characterized in that** in step d. the animal is recognized in the 3D image with the signal processing unit, on the basis of the information about the 3D image supplied in step c., and according to a first predetermined algorithm.

2. The method according to claim 1, **characterized in that** the collected information is, preferably with the first computer, compared with a predetermined development curve such as a growth curve, wherein preferably with the first computer an attention signal is generated when the collected information deviates from the development curve, with the deviation meeting a predetermined criterion.

3. The method according to claim 2, **characterized in that** the predetermined criterion is chosen such that an attention signal is generated when the information of the animal collected in time deviates relative to the development curve, more particularly, that the predetermined criterion is chosen such that an attention signal is generated when a growth of the animal lags behind the growth curve.

4. The method according to claim 2 or 3, **characterized in that** said attention signal comprises the identity determined in step e.

5. The method according to any one of the preceding claims, **characterized in that** step e. is carried out with a reader, the animals each provided with a tag which comprises information about an identity of an animal and which can be read out wirelessly by the reader, while preferably the reader and the tags are of the RFID and/or UHF type, wherein the reader is so disposed that in step e. the identity of an animal is determined which is at such a position in the 3D image of the area that the animal in step d. is recognized in the 3D image of the area.

6. The method (100) according to any one of the preceding claims, **characterized in that** in step b. the area comprises only a part of the space where the animals can be.

7. The method (100) according to claim 5 or 6, **characterized in that** the area that is covered with the at least one 3D camera and/or the multiplicity of cameras respectively comprises spaces of a multiplicity of pens.

8. The method (100) according to any one of the preceding claims, **characterized in that** the signal processing unit is part of the first computer, while optionally the signal processing unit and/or the first computer are in a cloud.

9. The method (100) according to at least claim 3, **characterized in that** each animal is furthermore provided with at least one sensor (19) for determining the behavior of the animal of step e., the behavior consisting, for example, in
a condition which the animal is in, such as walking, lying, eating and ruminating, and/or
information about when particular conditions occur, spread in time,
wherein the information about the behavior of the animal obtained with the at least one sensor is used in comparing the information collected in step h. with the predetermined development curve such as the growth curve.

10. The method (100) according to claim 9, **characterized in that** the information about the behavior of the animal obtained with the at least one sensor (19) is used to adjust the predetermined criterion, for example such that underweight of the animal is detected at a smaller deviation when it already appears earlier from the determined behavior that the animal eats relatively little or less often and vice versa.

11. A system (1) for monitoring the development in time of animals, in particular growth of animals, in particular of farm animals such as calves and piglets, the system comprising at least one space such as a pen (3) or barn space in which a multiplicity of animals can be brought together, at least one 3D camera and/or a multiplicity of cameras (5) such as a multiplicity of 2D cameras for obtaining a 3D image of an area which is at least for a part within the at least one space were the animals can be, a signal processing unit (9) for processing information about the 3D image, a first computer 11), and an identification unit (13), , and wherein the signal processing unit is further configured for, on the basis of the information about the 3D image, according to a second predetermined algorithm, estimating at least one condition parameter such as weight, a volume and/or a length parameter of the recognized animal, wherein the first computer is configured for collecting information obtained about the condition parameter of the animal at different points in time to obtain insight into the development such as growth of the animal in time, **characterized in that** the signal processing unit is configured for, according to a first predetermined algorithm, on the basis of the information about the 3D image, recognizing an animal in the 3D image, wherein the identification unit is configured to determine the identity of the animal which has been or is recognized by the signal processing unit.

12. The system according to claim 11, **characterized in that** the first computer is configured to compare the collected information with a predetermined development curve such as a growth curve, wherein the first computer is further configured for generating an attention signal when the collected information deviates from the development curve and wherein the deviation meets a predetermined criterion.

13. The system (1) according to claim 12, **characterized in that** the first computer (11) is so configured that an attention signal is generated when the information of the animal collected in time deviates relative to the development curve, more particularly, that the first computer is so configured that an attention signal is generated when a growth of the animal lags behind the growth curve.

14. The system (1) according to claim 12 or 13, **characterized in that** said attention signal comprises the identity determined with the identification unit (13).

15. The system (1) according to any one of the preceding claims 11-14, **characterized in that** the identification unit (13) comprises a reader, wherein the system furthermore includes a multiplicity of tags, wherein the animals are each provided with one of the tags which each comprise information about an identity of an animal, wherein at least the identity of the animal can be wirelessly read from a tag by the reader, wherein preferably the reader and the multiplicity of tags are of the RFID or UHF type.

16. The system according to claim 15, **characterized in that** the identification unit so disposed that, in use, the identity of an animal is determined which is at such a position in the 3D image that this animal is recognized in the 3D image with the signal processing unit, in use.

17. The system (1) according to any one of the preceding claims 11-16, **characterized in that** the 3D camera and/or the multiplicity of cameras (5) are so configured and/or disposed that, in use, the area comprises only a part of the space which the animals can be in.

18. The system (1) according to any one of claims 11-17, **characterized in that** the at least one 3D camera and/or the multiplicity of cameras (5) is so disposed that the area covers a multiplicity of spaces such as pens.

19. The system (1) according to any one of the preceding claims 11-18, **characterized in that** the signal processing unit (9) is part of the first computer (11), wherein optionally the signal processing unit and/or the first computer are in a cloud (17).

20. The system (1) according to at least claim 12, **characterized in that** the system furthermore includes sensors (19), wherein, in use, each animal is furthermore provided with at least one of the sensors for determining the behavior of the animal, the behavior consisting, for example, in
a condition, such as walking, lying, eating and/or ruminating, which the animal is in, and/or
information about when particular conditions occur, spread in time,
wherein the first computer is further configured for, in use, utilizing the information about the behavior of the animal obtained with the sensors in comparing the collected information with the predetermined development curve such as a growth curve.

21. The system (1) according to either one of the preceding claims 11-20, **characterized in that** the first computer (11) is configured for, in use, utilizing the information about the behavior of the animal obtained with the sensors (19) to adjust the predetermined criterion, for example such that, in use, underweight of the animal is detected at a smaller deviation when it already appears earlier from the determined behavior that the animal eats relatively little or less often and vice versa.

## Patentansprüche

1. Verfahren (100) zum zeitlichen Überwachen der Entwicklung von Tieren, wie das Überwachen des Wachstums von Tieren, insbesondere von Nutztieren wie Kälbern und Ferkeln, wobei das Verfahren umfasst:
a. Zusammenführen (101) einer Vielzahl von Tieren in mindestens einem Sammelraum, wie z. B. einem Pferch oder einem Stall, in dem sich die Tiere frei bewegen können;
b. Erstellen (102) eines 3D-Bildes eines Bereiches, der sich zumindest teilweise in dem mindestens einen Raum befindet, mit Hilfe mindestens einer 3D-Kamera und/oder einer Vielzahl von Kameras, wie einer Vielzahl von 2D-Kameras (5), während sich die Tiere in dem Bereich befinden können;
c. Übermitteln (103) von Informationen über das 3D-Bild an eine Signalverarbeitungseinheit (9);
d. Erkennen (104) eines Tieres auf dem 3D-Bild;
e. Bestimmen (105) der Identität des Tieres, das in Schritt d. erkannt wurde oder wird;
f. mit der Signalverarbeitungseinheit (9) auf der Grundlage der in Schritt c. gelieferten Informationen über das 3D-Bild und gemäß einem zweiten vorgegebenen Algorithmus, zumindest Schätzen (106) eines Zustandsparameters des Tieres wie eines Gewichts, eines Volumens und/oder eines Längenparameters des in Schritt d. erkannten Tieres;
g. Wiederholen (107) der Schritte d.-f., wenn das Tier wieder im Bild erscheint;
h. mit Hilfe eines ersten Computers (11), Sammeln (108) der in den Schritten d.-g. erhaltenen Informationen, um einen Einblick in die zeitliche Entwicklung des Tieres, wie das zeitliche Wachstum des Tieres, zu erhalten, **dadurch gekennzeichnet, dass** in Schritt d. das Tier in dem 3D-Bild mit der Signalverarbeitungseinheit auf der Grundlage der in Schritt c. gelieferten Informationen über das 3D-Bild und gemäß einem ersten vorgegebenen Algorithmus erkannt wird.

2. Verfahren nach Anspruch 1, **dadurch gekennzeichnet, dass** die gesammelten Informationen, vorzugsweise mit dem ersten Computer, mit einer vorgegebenen Entwicklungskurve wie einer Wachstumskurve verglichen werden, wobei vorzugsweise mit dem ersten Computer ein Aufmerksamkeitssignal erzeugt wird, wenn die gesammelten Informationen von der Entwicklungskurve abweichen, wobei die Abweichung ein vorgegebenes Kriterium erfüllt.

3. Verfahren nach Anspruch 2, **dadurch gekennzeichnet, dass** das vorgegebene Kriterium so gewählt wird, dass ein Aufmerksamkeitssignal erzeugt wird, wenn die zeitlich gesammelten Informationen des Tieres relativ zur Entwicklungskurve abweichen, insbesondere dass das vorgegebene Kriterium so gewählt wird, dass ein Aufmerksamkeitssignal erzeugt wird, wenn ein Wachstum des Tieres unter der Wachstumskurve liegt.

4. Verfahren nach Anspruch 2 oder 3, **dadurch gekennzeichnet, dass** das Aufmerksamkeitssignal die in Schritt e bestimmte Identität umfasst.

5. Verfahren nach einem der vorhergehenden Ansprüche, **dadurch gekennzeichnet, dass** Schritt e. mit einem Lesegerät durchgeführt wird, wobei die Tiere jeweils mit einem Tag versehen sind, der Informationen über eine Identität eines Tieres enthält und der vom Lesegerät drahtlos ausgelesen werden kann, wobei vorzugsweise das Lesegerät und die Tags vom RFID- und/oder UHF-Typ sind, wobei das Lesegerät so angeordnet ist, dass in Schritt e. die Identität eines Tieres bestimmt wird, das sich an einer solchen Position im 3D-Bild des Bereichs befindet, dass das Tier in Schritt d. im 3D-Bild des Bereichs erkannt wird.

6. Verfahren (100) nach einem der vorhergehenden Ansprüche, **dadurch gekennzeichnet, dass** in Schritt b. der Bereich nur einen Teil des Raumes umfasst, in dem sich die Tiere aufhalten können.

7. Verfahren (100) nach Anspruch 5 oder 6, **dadurch gekennzeichnet, dass** der Bereich, der mit der mindestens einen 3D-Kamera und/oder der Vielzahl von Kameras erfasst wird, Räume mit einer Vielzahl von Pferchen umfasst.

8. Verfahren (100) nach einem der vorhergehenden Ansprüche, **dadurch gekennzeichnet, dass** die Signalverarbeitungseinheit Teil des ersten Computers ist, wobei sich die Signalverarbeitungseinheit und/oder der erste Computer gegebenenfalls in einer Cloud befinden.

9. Verfahren (100) nach mindestens Anspruch 3, **dadurch gekennzeichnet, dass** jedes Tier außerdem mit mindestens einem Sensor (19) zur Bestimmung des Verhaltens des Tieres von Schritt e. versehen ist, wobei das Verhalten beispielsweise aus
einem Zustand besteht, in dem sich das Tier befindet, wie Gehen, Liegen, Fressen und Wiederkäuen, und/oder
aus Informationen darüber besteht, wann bestimmte Zustände zeitlich verteilt auftreten,
wobei die mit dem mindestens einen Sensor erhaltenen Informationen über das Verhalten des Tieres beim Vergleich der in Schritt h. gesammelten Informationen mit der vorgegebenen Entwicklungskurve, wie der Wachstumskurve, verwendet werden.

10. Verfahren (100) nach Anspruch 9, **dadurch gekennzeichnet, dass** die mit dem mindestens einen Sensor (19) erhaltenen Informationen über das Verhalten des Tieres genutzt werden, um das vorgegebene Kriterium anzupassen, beispielsweise so, dass Untergewicht des Tieres bei einer geringeren Abweichung erkannt wird, wenn sich aus dem ermittelten Verhalten bereits früher ergibt, dass das Tier relativ wenig oder weniger oft frisst und umgekehrt.

11. System (1) zum Überwachen der zeitlichen Entwicklung von Tieren, insbesondere des Wachstums von Tieren, insbesondere von Nutztieren, wie Kälbern und Ferkeln, wobei das System mindestens einen Raum, wie einen Pferch (3) oder einen Stall, in dem eine Vielzahl von Tieren zusammengebracht werden kann, mindestens eine 3D-Kamera und/oder eine Vielzahl von Kameras (5), wie eine Vielzahl von 2D-Kameras, um ein 3D-Bild eines Bereichs zu erhalten, der sich zumindest für einen Teil innerhalb des mindestens einen Raums befindet, in dem sich die Tiere befinden können, eine Signalverarbeitungseinheit (9) zum Verarbeiten von Informationen über das 3D-Bild, einen ersten Computer (11) und eine Identifizierungseinheit (13) umfasst, und wobei die Signalverarbeitungseinheit ferner so konfiguriert ist, dass sie auf der Grundlage der Informationen über das 3D-Bild gemäß einem zweiten vorgegebenen Algorithmus mindestens einen Zustandsparameter, wie z.B. ein Gewicht, einen Volumen- und/oder einen Längenparameter des erkannten Tieres, schätzt, wobei der erste Computer so konfiguriert ist, dass er die über den Zustandsparameter des Tieres erhaltenen Informationen zu verschiedenen Zeitpunkten sammelt, um einen zeitlichen Einblick in die Entwicklung, wie z.B. das Wachstum des Tieres, zu erhalten,
**dadurch gekennzeichnet, dass** die Signalverarbeitungseinheit konfiguriert ist, um gemäß einem ersten vorgegebenen Algorithmus auf der Grundlage der Informationen über das 3D-Bild ein Tier in dem 3D-Bild zu erkennen, wobei die Identifizierungseinheit konfiguriert ist, um die Identität des Tieres zu bestimmen, das von der Signalverarbeitungseinheit erkannt wurde oder erkannt wird.

12. System nach Anspruch 11, **dadurch gekennzeichnet, dass** der erste Computer so konfiguriert ist, dass er die gesammelten Informationen mit einer vorgegebenen Entwicklungskurve, wie beispielsweise einer Wachstumskurve, vergleicht, wobei der erste Computer ferner so konfiguriert ist, dass er ein Aufmerksamkeitssignal erzeugt, wenn die gesammelten Informationen von der Entwicklungskurve abweichen und wobei die Abweichung ein vorgegebenes Kriterium erfüllt.

13. System (1) nach Anspruch 12, **dadurch gekennzeichnet, dass** der erste Computer (11) so konfiguriert ist, dass ein Aufmerksamkeitssignal erzeugt wird, wenn die zeitlich erfasste Information des Tieres relativ zur Entwicklungskurve abweicht, insbesondere, dass der erste Computer so konfiguriert ist, dass ein Aufmerksamkeitssignal erzeugt wird, wenn ein Wachstum des Tieres hinter der Wachstumskurve zurückbleibt.

14. System (1) nach Anspruch 12 oder 13, **dadurch gekennzeichnet, dass** das Aufmerksamkeitssignal die mit der Identifizierungseinheit (13) ermittelte Identität umfasst.

15. System (1) nach einem der vorhergehenden Ansprüche 11 bis14, **dadurch gekennzeichnet, dass** die Identifizierungseinheit (13) ein Lesegerät umfasst, wobei das System ferner eine Vielzahl von Tags umfasst, wobei die Tiere jeweils mit einem der Tags versehen sind, die jeweils Informationen über eine Identität eines Tieres umfassen, wobei zumindest die Identität des Tieres drahtlos von einem Tag durch das Lesegerät gelesen werden kann, wobei vorzugsweise das Lesegerät und die Vielzahl von Tags vom RFID- oder UHF-Typ sind.

16. System nach Anspruch 15, **dadurch gekennzeichnet, dass** die Identifizierungseinheit so angeordnet ist, dass im Gebrauch die Identität eines Tieres bestimmt wird, das sich an einer solchen Position im 3D-Bild befindet, dass dieses Tier im 3D-Bild mit der Signalverarbeitungseinheit erkannt wird.

17. System (1) nach einem der vorhergehenden Ansprüche 11 bis 16, **dadurch gekennzeichnet, dass** die 3D-Kamera und/oder die Vielzahl von Kameras (5) so konfiguriert und/oder angeordnet sind, dass der Bereich im Gebrauch nur einen Teil des Raumes umfasst, in dem sich die Tiere aufhalten können.

18. System (1) nach einem der Ansprüche 11 bis 17, **dadurch gekennzeichnet, dass** die mindestens eine 3D-Kamera und/oder die Vielzahl von Kameras (5) so angeordnet ist, dass der Bereich eine Vielzahl von Räumen, wie z. B. Pferche, abdeckt.

19. System (1) nach einem der vorhergehenden Ansprüche 11 bis 18, **dadurch gekennzeichnet, dass** die Signalverarbeitungseinheit (9) Teil des ersten Computers (11) ist, wobei sich optional die Signalverarbeitungseinheit und/oder der erste Computer in einer Cloud (17) befinden.

20. System (1) nach mindestens Anspruch 12, **dadurch gekennzeichnet, dass** das System ferner Sensoren (19) umfasst, wobei im Gebrauch jedes Tier ferner mit mindestens einem der Sensoren versehen ist, um das Verhalten des Tieres zu bestimmen, wobei das Verhalten zum Beispiel
aus einem Zustand wie Gehen, Liegen, Fressen und/oder Wiederkäuen besteht, in dem sich das Tier befindet, und/oder
aus Informationen darüber besteht, wann bestimmte Zustände zeitlich verteilt auftreten,
wobei der erste Computer ferner so konfiguriert ist, dass er im Gebrauch die mit den Sensoren erhaltenen Informationen über das Verhalten des Tieres verwendet, um die gesammelten Informationen mit der vorgegebenen Entwicklungskurve, wie einer Wachstumskurve, zu vergleichen.

21. System (1) nach einem der vorhergehenden Ansprüche 11 bis 20, **dadurch gekennzeichnet, dass** der erste Computer (11) so konfiguriert ist, dass er im Gebrauch die mit den Sensoren (19) erhaltenen Informationen über das Verhalten des Tieres verwendet, um das vorgegebene Kriterium anzupassen, beispielsweise so, dass im Gebrauch Untergewicht des Tieres bei einer geringeren Abweichung erkannt wird, wenn sich aus dem ermittelten Verhalten bereits früher ergibt, dass das Tier relativ wenig oder weniger oft frisst, und umgekehrt.

## Revendications

1. Procédé (100) de suivi du développement d'animaux dans le temps, tel que le suivi de la croissance d'animaux, en particulier d'animaux de ferme tels que des veaux et des porcelets, le procédé comprenant les étapes consistant à :
a. rassembler (101) une multiplicité d'animaux dans au moins un espace collectif, tel qu'un enclos ou un espace de grange, dans lequel les animaux peuvent se déplacer librement ;
b. obtenir (102) une image 3D d'une zone qui se trouve au moins pour une partie à l'intérieur dudit au moins un espace, à l'aide d'au moins une caméra 3D et/ou d'une multiplicité de caméras telle qu'une multiplicité de caméras 2D (5) tandis que les animaux peuvent se trouver dans la zone ;
c. fournir (103) des informations sur l'image 3D à une unité de traitement de signal
d. reconnaître (104) un animal dans l'image 3D ;
e. déterminer (105) l'identité de l'animal qui a été ou est reconnu à l'étape d ;
f. avec l'unité de traitement de signal (9), sur la base des informations sur l'image 3D fournies à l'étape c, et selon un deuxième algorithme prédéterminé, estimer au moins (106) un paramètre de condition de l'animal tel qu'un poids, un paramètre de volume et/ou de longueur de l'animal reconnu à l'étape d. ;
g. répéter (107) les étapes d - f lorsque l'animal réapparaît dans l'image ;
h. à l'aide d'un premier ordinateur (11), collecter (108) les informations obtenues aux étapes d - g pour obtenir un aperçu du développement dans le temps de l'animal, tel que la croissance dans le temps de l'animal, **caractérisé en ce que**
à l'étape d l'animal est reconnu dans l'image 3D avec l'unité de traitement du signal, sur la base des informations sur l'image 3D fournies à l'étape c, et selon un premier algorithme prédéterminé.

2. Procédé selon la revendication 1, **caractérisé en ce que** les informations collectées sont, de préférence avec le premier ordinateur, comparées à une courbe d'évolution prédéterminée telle qu'une courbe de croissance, dans lequel de préférence avec le premier ordinateur, un signal d'alerte est généré lorsque les informations collectées s'écartent de la courbe de développement, l'écart répondant à un critère prédéterminé.

3. Procédé selon la revendication 2, **caractérisé en ce que** le critère prédéterminé est choisi de telle sorte qu'un signal d'alerte soit généré lorsque les informations de l'animal recueillies dans le temps s'écartent par rapport à la courbe de développement, plus particulièrement, que le critère prédéterminé soit choisi tel qu'un signal d'alerte est généré lorsqu'une croissance de l'animal est en retard par rapport à la courbe de croissance.

4. Procédé selon la revendication 2 ou 3, **caractérisé en ce que** ledit signal d'alerte comprend l'identité déterminée à l'étape e.

5. Procédé selon l'une quelconque des revendications précédentes, **caractérisé en ce que** l'étape e est réalisée avec un lecteur, les animaux étant pourvus chacun d'une étiquette qui comprend des informations sur l'identité d'un animal et qui peut être lue sans fil par le lecteur, de préférence le lecteur et les étiquettes sont de type RFID et/ou UHF, dans lequel le lecteur est disposé de telle sorte qu'à l'étape e, l'identité d'un animal est déterminée et se trouve à une position telle dans l'image 3D de la zone que l'animal à l'étape d est reconnu dans l'image 3D de la zone.

6. Procédé (100) selon l'une quelconque des revendications précédentes, **caractérisé en ce qu'**à l'étape b la zone ne comprend qu'une partie de l'espace où peuvent se trouver les animaux.

7. Procédé (100) selon la revendication 5 ou 6, **caractérisé en ce que** la zone couverte par la au moins une caméra 3D et/ou la multiplicité de caméras comprend respectivement des espaces d'une multiplicité d'enclos.

8. Procédé (100) selon l'une quelconque des revendications précédentes, **caractérisé en ce que** l'unité de traitement du signal fait partie du premier ordinateur, tandis qu'éventuellement l'unité de traitement de signal et/ou le premier ordinateur se trouvent dans le nuage.

9. Procédé (100) selon au moins la revendication 3, **caractérisé en ce que** chaque animal est en outre muni d'au moins un capteur (19) pour déterminer le comportement de l'animal de l'étape e, le comportement consistant, par exemple, dans
une condition dans lequel se trouve l'animal, comme marcher, s'allonger, manger et ruminer, et/ou
des informations sur le moment où des conditions particulières se produisent, étalées dans le temps,
dans lequel les informations concernant le comportement de l'animal obtenues avec ledit au moins un capteur sont utilisées pour comparer les informations collectées à l'étape h avec la courbe de développement prédéterminée telle que la courbe de croissance.

10. Procédé (100) selon la revendication 9, **caractérisé en ce que** les informations sur le comportement de l'animal obtenues avec l'au moins un capteur (19) sont utilisées pour ajuster le critère prédéterminé, par exemple de telle sorte que l'insuffisance pondérale de l'animal soit détectée avec un écart plus petit alors qu'il apparaît déjà plus tôt par rapport au comportement déterminé que le l'animal mange relativement peu ou moins souvent et vice versa.

11. Système (1) de suivi de l'évolution dans le temps d'animaux, notamment de la croissance d'animaux, notamment d'animaux de ferme tels que veaux et porcelets, le système comprenant au moins un espace tel qu'un enclos (3) ou espace de grange dans lequel une multiplicité d'animaux peuvent être réunis, au moins une caméra 3D et/ou une multiplicité de caméras (5) telle qu'une multiplicité de caméras 2D pour obtenir une image 3D d'une zone qui est au moins pour une partie à l'intérieur du au moins un espace où peuvent se trouver les animaux, une unité de traitement de signal ( 9) pour traiter des informations concernant l'image 3D, un premier ordinateur (11) et une unité d'identification (13), et dans lequel l'unité de traitement de signal est en outre configurée pour, sur la base des informations concernant l'image 3D, selon un deuxième algorithme prédéterminé, estimer au moins un paramètre de condition tel que le poids, un volume et/ou un paramètre de longueur de l'animal reconnu, le premier ordinateur étant configuré pour collecter des informations obtenues concernant le paramètre de condition de l'animal à différents moments dans le temps pour obtenir un aperçu du développement tel que la croissance de l'animal dans le temps,
**caractérisé en ce que**
l'unité de traitement de signal est configurée pour, selon un premier algorithme prédéterminé, sur la base des informations concernant l'image 3D, reconnaître un animal dans l'image 3D, l'unité d'identification étant configurée pour déterminer l'identité de l'animal qui a été ou est reconnu par l'unité de traitement du signal.

12. Système selon la revendication 11, **caractérisé en ce que** le premier ordinateur est configuré pour comparer les informations collectées avec une courbe de développement prédéterminée telle qu'une courbe de croissance, dans lequel le premier ordinateur est en outre configuré pour générer un signal d'alerte lorsque les informations collectées s'écartent de la courbe de développement et dans lequel l'écart répond à un critère prédéterminé.

13. Système (1) selon la revendication 12, **caractérisé en ce que** le premier ordinateur (11) est configuré de telle sorte qu'un signal d'alerte est généré lorsque les informations de l'animal collectées dans le temps s'écartent par rapport à la courbe de développement, plus particulièrement le premier ordinateur est configuré de telle sorte qu'un signal d'alerte est généré lorsqu'une croissance de l'animal est en retard par rapport à la courbe de croissance.

14. Système (1) selon la revendication 12 ou 13, **caractérisé en ce que** ledit signal d'alerte comprend l'identité déterminée avec l'unité d'identification (13).

15. Système (1) selon l'une quelconque des revendications précédentes 11 à 14,
**caractérisé en ce que** l'unité d'identification (13) comprend un lecteur, dans lequel le système comprend en outre une multiplicité d'étiquettes, dans lequel les animaux reçoivent chacun l'une des étiquettes qui comprennent chacune des informations sur une identité d'un animal, dans lequel au moins l'identité de l'animal peut être lue sans fil à partir d'une étiquette par le lecteur, dans lequel de préférence le lecteur et la multiplicité d'étiquettes sont de type RFID ou UHF.

16. Système selon la revendication 15, **caractérisé en ce que** l'unité d'identification est disposée de telle sorte que, lors de son utilisation, l'identité d'un animal est déterminée qui se trouve à une position telle dans l'image 3D que cet animal est reconnu dans l'image 3D avec l'unité de traitement du signal, en cours d'utilisation.

17. Système (1) selon l'une quelconque des revendications précédentes 11 à 16, **caractérisé en ce que** la caméra 3D et/ou la multiplicité de caméras (5) sont configurées et/ou disposées de telle sorte que, en utilisation, la zone comprend seulement une partie de l'espace dans lequel les animaux peuvent se trouver.

18. Système (1) selon l'une quelconque des revendications 11 à 17, **caractérisé en ce que** la au moins une caméra 3D et/ou la multiplicité de caméras (5) est disposée de telle sorte que la zone couvre une multiplicité d'espaces tels que des enclos.

19. Système (1) selon l'une quelconque des revendications précédentes 11 à 18,
**caractérisé en ce que** l'unité de traitement du signal (9) fait partie du premier ordinateur (11), dans lequel éventuellement l'unité de traitement de signal et/ou le premier ordinateur se trouvent dans le nuage (17).

20. Système (1) selon au moins la revendication 12, **caractérisé en ce que** le système comprend en outre des capteurs (19), dans lequel, en cours d'utilisation, chaque animal est en outre pourvu d'au moins un des capteurs pour déterminer le comportement de l'animal, le comportement consistant, par exemple, dans
une condition telle que marcher, se coucher, manger et/ou ruminer dans lequel se trouve l'animal, et/ou
des informations sur le moment où des conditions particulières se produisent, étalées dans le temps,
dans lequel le premier ordinateur est en outre configuré pour, en cours d'utilisation, utiliser les informations sur le comportement de l'animal obtenues avec les capteurs dans la comparaison les informations collectées avec la courbe de développement prédéterminée telle qu'une courbe de croissance.

21. Système (1) selon l'une ou l'autre des revendications précédentes 11 à 20,
**caractérisé en ce que** le premier ordinateur (11) est configuré pour, en cours d'utilisation, utiliser les informations sur le comportement de l'animal obtenues avec les capteurs (19) pour ajuster le critère prédéterminé, par exemple de telle sorte que, en cours d'utilisation, l'insuffisance pondérale de l'animal est détecté avec un écart plus faible lorsqu'il apparaît déjà plus tôt par rapport au comportement déterminé que l'animal mange relativement peu ou moins souvent et vice versa.
